# EUROPEAN PATENT SPECIFICATION

(11) **EP 0 566 376 B1**
(45) Date of publication and mention of the grant of the patent: **24.01.1996**
(21) Application number: 93302881.3
(22) Date of filing: 14.04.1993
(51) Int. Cl.: B09B 3/00

(54) **A method and equipment for sintering fly ashes of incinerated municipal waste**
Verfahren und Vorrichtung zum Sintern von Flugasche von verbranntem Hausmüll
Procédé et dispositif pour frittage des cendres volantes de déchet municipaux cinérable

(30) Priority: 15.04.1992 JP 95385/92
(43) Date of publication of application: 20.10.1993
(73) Proprietor: KABUSHIKI KAISHA KOBE SEIKO SHO, Kobe-shi Hyogo-ken 651 (JP)
(72) Inventor: Yamamoto, Yoshihiro, c/o K. K. Kobe Seiko Sho, Kobe-shi, Hyogo-ken 651 (JP); Terukina, Jiro, c/o K. K. Kobe Seiko Sho, Kobe-shi, Hyogo-ken 651 (JP)
(74) Representative: Blake, John Henry Francis

(56) References cited:
- DE-A- 3 908 172
- CHEMICAL ABSTRACTS, vol. 102, no. 10, March 11, 1985, Columbus, Ohio, USA TANG SATHITKULCHAI, M.; AUSTIN, L. "Studies of sintering of coal ash relevant to pulverized coal utility boilers. 2-Prelimi- nary studies of compressive strength of fly ash sinters" page 147, column 2, abstract-no. 81 399m
- CHEMICAL ABSTRACTS, vol. 99, no. 24, December 1983, Columbus, Ohio, USA, KOBE STEEL, LTD "Sintering of fly ash pallets" page 283, column 2, abstract-no. 199 669 x & Jpn. Kokai Tokkyo Koho JP 58 115 978 (83 115 078)

## Description

This invention relates to a method and equipment for manufacturing sintered pellets by pelletizing and sintering fly ash out of incinerated ash of municipal waste discharged from a municipal waste incineration facility.

As well-known, fly ash out of incinerated ash of municipal waste is scavenged and recovered in the form of dusts by a dust collector such as a bag filter.

The recovered fly ash contains a substantial amount of various heavy metals and dioxins which are toxic even in a small quantity. Accordingly, it is necessary to process the heavy metals and dioxins contained in the fly ash so as to prevent these from flying and eluting, for example, before the fly ash is buried at a final disposal facility.

As a process for preventing the heavy metals and dioxins from flying and eluting, there has been known a processing method called a cementing method. The cementing method has generally three types: a method of manufacturing spherical pellets (diameter of 10 to 20 mm) from the heavy metals and dioxins by the use of a pan type pelletizer; a method of forming them into cylinders (20 mm (diameter) × 30 mm (length)) by the use of a kneading and extruding apparatus; and a method of pelletizing them into lumps having various diameters (diameter of 5 to 50 mm) by the use of a vibrating pelletizer.

However, in the case of the fly ash of incinerated municipal waste, the heavy metals can be almost prevented from eluting by the cementing method. However, the fly ash contains various salts originating from the municipal waste as shown in a component table of fly ash (TABLE-1), and a substantial amount of dioxins having most toxicities. Accordingly, there cannot be obtained pellets of high rigidity even if the fly ash is solidified by the cementing method. If these pellets are stored for a long time, the salts elute and pulverize by the decay phenomenon of pellets, thereby increasing the likelihood that toxic substances such as dioxins fly again.

**TABLE-1**

| COMPOSITION | | WEIGHT (%) |
|---|---|---|
| Si0₂ | | 23.9 |
| Al₂O₃ | | 17.4 |
| Fe₂O₃ | | 6.0 |
| SALTS | Ca | 27.0 |
| | Mg | 3.0 |
| | Na | 4.6 |
| | K | 4.2 |

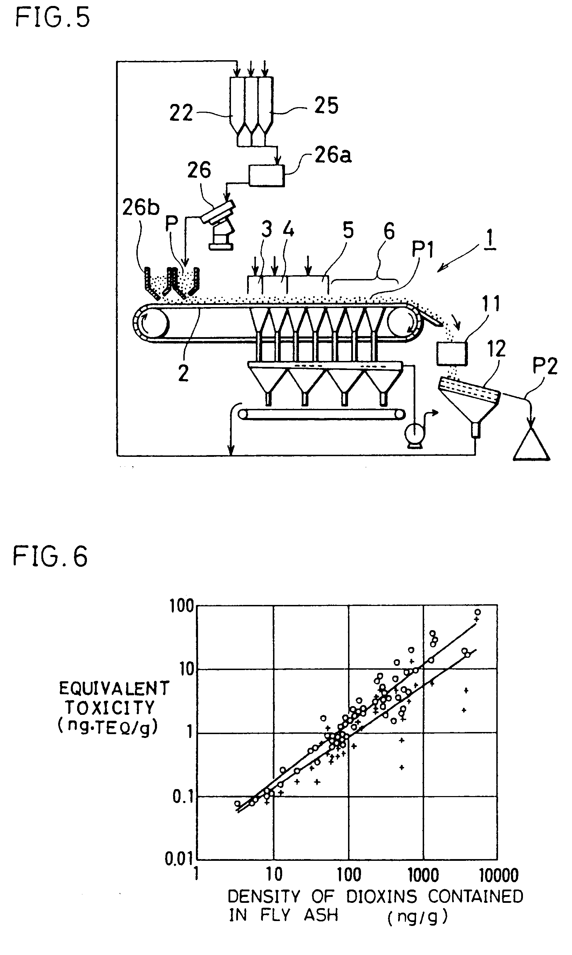

The toxicity of dioxins increases as the density of dioxins in fly ash increases as shown in Fig. 6 which is a graph showing a relationship between the density of dioxins in fly ash and the toxicity.

Japanese Unexamined Patent Publication No. 62-256747 discloses a method for sintering coal fly ash scavenged from a combustion equipment such as a boiler which burns not municipal waste but coal. This method pelletizes and sinters coal fly ash so as to manufacture lightweight aggregates using a sintering equipment as shown in Fig. 5.

Hereafter, the sintering equipment disclosed in the above publication will be described summarily citing the reference numerals used therein. The sintering equipment 1 is provided with a grate 2 constructed so that horizontal rods move circulatorily as in a caterpillar. Above the grate 2 are arranged a drying and preheating chamber 3 for preheating raw pellets P conveyed thereto on the grate 2, an ignition chamber 4 including an unillustrated ignition burner for igniting the raw pellets P, and a sintering chamber 5 for sintering the ignited raw pellets P. There is also arranged a cooling zone 6 downstream from the sintering chamber 5 with respect to a conveying direction of the pellets so as to cool the sintered pellets P1.

Upstream from the grate 2 are arranged a dust silo 22, a coal ash silo 25, a kneader 26a for kneading the dusts and coal supplied from the silos 22, 25, and a pan type pelletizer 25 for pelletizing the kneaded matter supplied from the kneader 26a. Downstream from the grate 2 are arranged a crusher 11 for crushing the sintered pellets P1 and a vibrating sieve 12 for separating the crushed sintered pellets P1.

The dust and coal ashes stored in the dust silo 22 and the coal ash silo 25 are supplied to the kneader 26a to be kneaded therein. The kneaded matter is then supplied to the pan type pelletizer 26 to be pelletized into raw pellets P, which are supplied to a portion of the grate 2 upstream from the drying and preheating chamber 3 through a hopper 26b.

The raw pellets P supplied to the grate 2 are dried and preheated in the drying and preheating chamber 3 while being conveyed by the grate 2; ignited in the ignition chamber 4; and sintered in the sintering chamber 5 so as to obtain sintered pellets P1. These sintered pellets P1 are cooled in the cooling zone 6. Through the crusher 11 and the vibrating sieve 12, only product pellets P2 having a specified particle size become lightweight aggregates. Those having fallen through perforations of the vibrating sieve 12 are returned to the dust silo 22. Ores and dusts fallen from the grate 2 are returned to the dust silo 22 together with the dusts from the vibrating sieve 12.

Further, a municipal waste incineration facility is required to burn the municipal waste completely to the extent that an ignition loss becomes 3% or less. Since the municipal waste is in fact burned completely so as to meet this requirement, the fly ash contains hardly carbons but salts in a large quantity as described above. Further, since the properties of the fly ash themselves such as a melting point differ from those of the coal ash, the lightweight aggregates cannot be manufactured easily by adopting the method and the conditions for sintering the coal ash as they are.

Furthermore, the coal ash sintering equipment is a large-scale equipment in which the coal ash are normally sintered 200 to 300 tons/day (7 to 12 tons/hour). Contrary to this, an equipment for processing the fly ash discharged from the municipal waste incineration facility is sufficient to be a small-scale equipment of sintering the fly ash 10 to 50 tons/day (0.4 to 2 tons/hours).

Moreover, the fly ash sintering equipment is required to operate intermittently for shorter than 24 hours per day or continuously for 24 hours per day in accordance with a general operating time of 8 to 24 hours per day of the municipal waste incineration facility. Thus, the fly ash sintering equipment must be capable of coping with either operation mode of the municipal waste incineration facility flexibly.

Particularly, in the case where the incinerated ash of the municipal waste is processed, a processing cost is an essential determination point in determining whether the equipment will be adopted. Thus, there is an increasing demand for a sintering equipment capable of manufacturing stable products which are low in investment and operation cost.

In view thereof, the present invention has been intended to overcome the problems residing in the prior art.

The present invention has overcome the problems by a method comprising steps of adding water, carbon, and a binder to fly ash of incinerated municipal waste discharged from a municipal waste incineration facility, kneading the mixture into raw pellets, holding these raw pellets at a high temperature for a predetermined time.

It may be preferable to add 5 or less weight percent carbon to 75 or more weight percent fly ash of incinerated municipal waste. Also, it may be preferable to use a mixture or either one of 10 or less weight percent of cement and bentonite as the binder. Further, it may be preferable to sinter the raw pellets at a temperature of 900 to 1300 °C for one minute or more.

According to the above methods, since the fly ash is added and mixed with water, carbon, and binder, and kneaded into raw pellets, and sintered at a high temperature, the stable sintered pellets can be manufactured. Also, toxic dioxins contained in the fly ash are thermally decomposed due to the high temperature in the sintering process.

The added carbon is burned in the sintering process to generate heat which is contributable to the acquirement of satisfactory sintered pellets. Also, the added amount of carbon is set at not larger than 5 weight percent, there can be prevented an event where a larger amount of carbon is burnt to make the sintered pellet porous. As a result, the sintered pellets having high rigidity can be obtained.

Also, the addition of cement and bentonite assures stable pellets owing to the tenacity of the cement and bentonite, and prevents sintered pellets from decaying in storage owing to the solidifying force of the cement and bentonite. Also, the added amount of heavy and expensive cement and bentonite is set at not larger than 10 weight percent, the obtained sintered pellets are relatively light-weight. This facilitates the handling of the pellets such as transportation and avoids an increase in a manufacturing cost.

Moreover, since the raw pellets are sintered at a temperature of 900 to 1300°C for longer than 1 minute, the dioxins contained in the fly ash are thermally decomposed and the heavy metals are fixed within the sintered pellets.

The invention is also directed to an equipment for sintering fly ash of incinerated municipal waste comprising an endless moving grate having a horizontal portion for carrying a material to be sintered; a drying and preheating chamber for drying and preheating the material; an ignition chamber for igniting the sintered material; a sintering chamber for sintering the sintered material, the drying and preheating chamber, ignition chamber, and sintering chamber being disposed above the moving grate; a hot blast supply duct for supplying a hot blast into the drying and preheating chamber, ignition chamber, and sintering chamber; and electric heating means are provided in one or more of the interior of the drying and preheating chamber, ignition chamber, and sintering chamber and the interior of the duct.

It may be preferable to arrange a refractory in each of the drying and preheating chamber, ignition chamber, sintering chamber, and duct so as to cover an inner wall thereof and the electric heating means.

According to the above sintering equipment, since the electric heating means is provided in either one or both of the interior of the drying and preheating chamber, ignition chamber, and sintering chamber and the interior of the duct, the sintered material on the moving grate and the hot blast in the duct can be heated by the electric heating means. This compensates for a reduction in a heat retaining effect resulting from a smaller construction of the sintering equipment.

Further, the sintering temperature can be controlled easily by regulating an amount of power applied to the electric heating elements, thereby improving the accuracy of the temperature control.

Moreover, the temperature of the sintering equipment can be raised rapidly at the start of the operation by heating the sintering equipment forcibly with the electric heating means, thereby enabling a rapid start-up of the equipment. As a result, a loss time in the operating time is reduced to increase a working efficiency and thus an intermittent operation during which the equipment is started many times can be carried out efficiently.

Furthermore, by utilizing power from a private power generator provided in a municipal waste incineration facility for generating power utilizing waste heat as power supplied to the electric heating elements, a processing cost for the fly ash can be reduced greatly.

Moreover, the heat evolved from the electric heating elements can be retained in the drying and preheating chamber, ignition chamber, and sintering chamber due to a heat insulating effect of the refractories, thereby providing a satisfactory thermal efficiency.

These and other objects, features and advantages of the present invention will become more apparent upon a reading of the following detailed description and accompanying drawings, in which:
Fig. 1 is a diagram showing an exemplary construction of an equipment according to the invention for sintering fly ash of incinerated municipal waste;
Fig. 2 is a sectional view taken along the line A-A in Fig. 1;
Fig. 3 is a chart showing how heat energy is utilized;
Fig. 4 is a graph showing a relationship between the processing temperature and the amount of remained dioxins;
Fig. 5 is a construction diagram showing an equipment of the prior art for sintering fly ash of coal; and
Fig. 6 is a graph showing a relationship between the density of dioxins and the toxicity.

A sintering equipment 1 is basically provided with a grate 2 which is driven circulatorily as in a caterpillar, a drying and preheating chamber 3 arranged above the grate 2, an ignition chamber 4 arranged downstream from the drying and preheating chamber 3, and a sintering chamber 5 arranged further downstream from the ignition chamber 4. On the grate 2 downstream from the sintering chamber 5 is defined a cooling zone 6.

The grate 2 is wound around a pair of transversely spaced sprockets, and is driven circulatorily through the sprockets by drivingly rotating an unillustrated drive means. The grate 2 conveys raw pellets P supplied from a pelletizer 20 to be described later according to the circulatory movement thereof.

Each of the drying and preheating chamber 3, ignition chamber 4, and sintering chamber 5 is formed into a hood so as to cover a top portion of the grate 2. The pellets P are conveyed below these chambers. The drying and preheating chamber 3 dries the raw pellets P being conveyed on the grate 2; the ignition chamber 4 ignites the raw pellets P dried in the chamber 3; and the sintering chamber 5 sinters the raw pellets P ignited in the chamber 4. The raw pellets P having passed through the sintering chamber 5 become sintered pellets P.

At a ceiling of each of the drying and preheating chamber 3, ignition chamber 4, and sintering chamber 5 is provided a hot blast supply duct 7 for supplying a hot blast into the chamber.

On the underside of an upper portion of the grate 2 on which the raw pellets P and sintered pellets P1 are conveyed are arranged a plurality of wind boxes 8 sequentially from an upstream side to a downstream side in a conveying direction. Below the wind boxes 8 are provided exhaust ducts 9, which are in communication with an induced blower 10. The air and combustion gas in the drying and preheating chamber 3, ignition chamber 4, and sintering chamber 5 pass through a layer of the raw pellets P and sintered pellets P1, and are aspirated by the induced blower 10 through the grate 2, wind boxes 8, and exhaust ducts 9. The combustion gas aspirated by the induced blower 10 are recycled to the chambers 3, 4, 5 through the hot blast supply ducts 7. In this way, the heat in the equipment is utilized effectively through the recirculation.

Downstream from the cooling zone of the grate 2 is provided a crusher 11. A vibrating sieve 12 is provided downstream from the crusher 11. The sintered pellets P supplied from the cooling zone 6 of the grate 2 are crushed if necessary and are separated by the vibrating sieve 12. Tiny pellets fallen below through perforations of the vibrating sieve 12, ores and dusts fallen from the grate 2 are joined and returned to a dust silo 22 of the pelletizer 20 so as to be used again. Those remaining on the vibrating sieve 12 become product pellets P2, which are supplied to a product bunker 13 provided downstream from the vibrating sieve 12. The product pellets P2 are stored in the bunker 13 temporarily. The product pellets P2 stored in the bunker 13 are discharged to a transport means such as a truck whenever necessary, and are transported outside the system.

The pelletizer 20 includes a water tank 21, a dust silo 22, a carbon silo 23, a cement silo 24, a fly ash silo 25, a molder 26, and a curing conveyor 27. The water tank 21 stores water to be used in a kneading operation. The dust silo 22 stores the tiny pellets, the dusts fallen from the grate 2, and the like. The carbon silo 23 stores carbon which is self-burning fuel for the raw pellets P. The cement silo 24 stores cement and bentonite as a solidifying agent. The fly ash silo 25 stores fly ash recovered by a dust collector or the like in a municipal waste incineration facility H. The molder 25 molds materials supplied from the above storages into raw pellets P having specified shape and size. The curing conveyor 27 conveys the raw pellets P molded by the molder 26 to a most upstream side of the grate 2.

At the water tank 21 is provided an unillustrated control valve whose opening is adjusted so as to regulate an amount of water to be supplied to the molder 26. At the bottom of each of the dust silo 22, carbon silo 23, cement silo 24, and fly ash silo 25 is provided an unillustrated table feeder. A rotating speed of each table feeder is controlled so as to regulate an amount of content stored in the corresponding silo to be supplied to the molder 26.

When a predetermined amount of water is supplied from the water tank 21 to the molder 26, predetermined amounts of dust, carbon, cement or bentonite, and fly ash are supplied respectively from the dust silo 22, carbon silo 23, cement silo 24, and fly ash silo 25 to the molder 26. The dust, carbon, cement or bentonite, and fly ash supplied to the molder 26 are kneaded under the presence of simultaneously supplied water for the kneading into raw pellets P.

According to the invention, electric heating elements 5c are buried in inner walls of the drying and preheating chamber 3, ignition chamber 4, and sintering chamber 5 provided above the grate 2, and in inner walls of the respective hot blast supply ducts 7.

Since the drying and preheating chamber 3, ignition chamber 4, and sintering chamber 5 are constructed substantially identically, the construction thereof will be described taking the sintering chamber 5 shown in Fig. 5 as an example. The sintering chamber 5 is made of a refractory 5b. An outer circumferential surface of the sintering chamber 5 is covered with an iron shell 5a. Side portions of the refractory 5b extend vertically so as to hold opposite side portions of the grate 2 therebetween. The electric heating elements 5c are buried in the inner walls of the side portions and a ceiling portion of the refractory 5b. The shell 5a extends below the sintering chamber 5 to thereby define the wind box 8 in the form of a hopper. A bottom portion of the wind box 8 is in communication with the exhaust duct 9.

A top portion of the sintering chamber 5 is in communication with the hot blast supply duct 7 made of a refractory 7b. An outer circumferential surface of the hot blast supply duct 7 is also covered with an iron shell 7a. In the hot blast supply duct 7 are provided bar-like electric heating elements 7c which traverse the duct 7 horizontally.

In this embodiment is used the bar-like electric heating elements 7c, the so-called radiant tubes. A radiant tube has a heater therein and radiates heat from an outside surface thereof. The shape of a heating element is not limited to the form of a bar. In consideration of a heating efficiency of the hot blast, it may be possible to provide an electric tubular heating element provided with radiation fins on the outside surface thereof, or an electric heating element in a spiral form, or an electric heating element in a zigzag form.

Also, in the above embodiment, electric heating elements are provided in the hot blast supply duct 7, drying and preheating chamber 3, ignition chamber 4, and sintering chamber 5. However, according to the invention, electric heating elements are not required to be provided in all the duct 7 and chambers 3, 4, and 5. It may be possible to provide electric heating elements in either one of the duct 7 and chambers 3, 4, and 5.

In above embodiment, also, the electric heating elements 7 are provided in the duct 7 in the traverse direction. However, it may be possible to provide electric heating elements in the wall of the duct 7.

Further, although the duct 7, and chambers 3, 4, and 5 are formed separately of one another in the above embodiment, they may be formed integrally with one another.

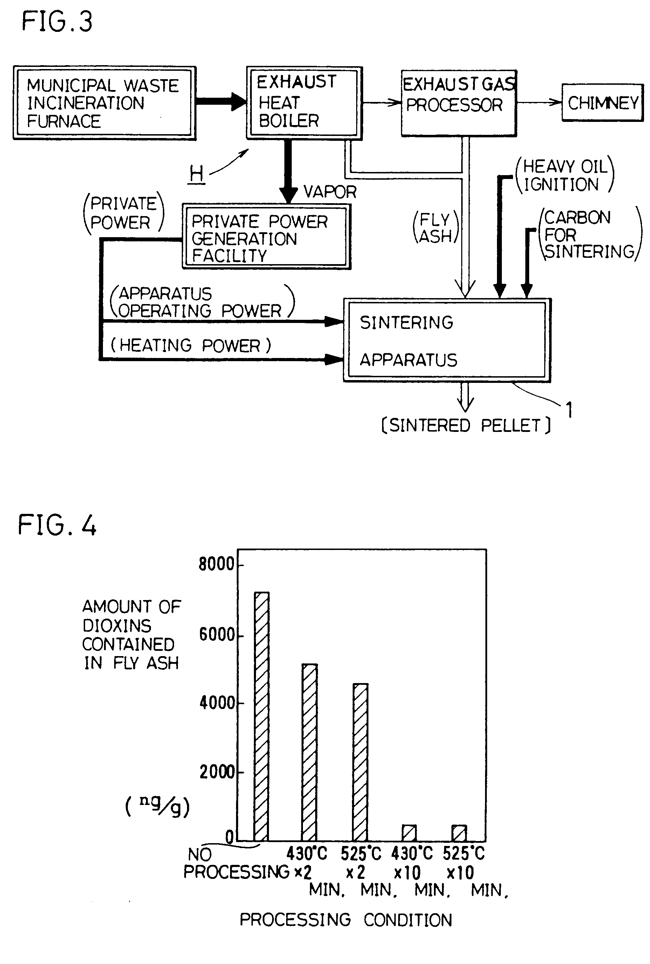

Next, description will be given on how heat energy is utilized according to the invention with reference to a chart shown in Fig. 3. Conventionally, heavy oil used for the ignition and carbon used for the sintering are supplied to the sintering equipment 1 so as to sinter the raw pellets by the heat of combustion of the heavy oil and carbon. However, according to the invention, in addition to these heat energies, power is generated in a private power generation facility using the steam generated from a waste heat boiler of the municipal waste incineration facility H. The obtained privately generated power is separated and supplied to the sintering equipment 1 as an equipment operating power and a heating power.

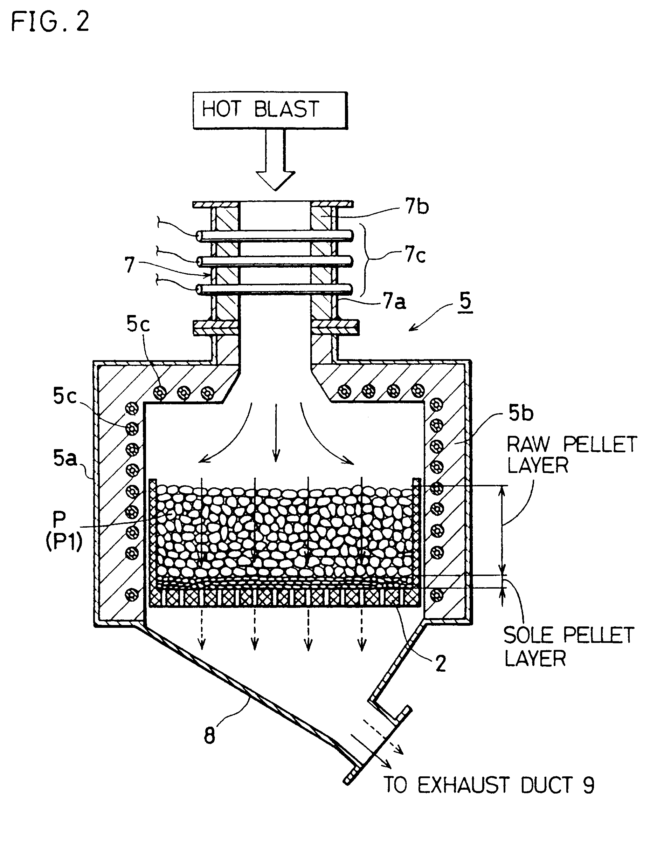

The equipment operating power is used to drive various drive devices in the sintering equipment 1, and the heating power is supplied to the respective electric heating elements 5c, 7c so as to heat the interior of the sintering chamber 5 and the hot blast supply duct 7 shown in Fig. 2. In this way, a poor thermal efficiency resulting from a smaller size of the sintering equipment 1 is compensated for. Particularly, if an automatic control is executed such that an amount of power supplied to the respective electric heating elements 5c, 7c is regulated so as to maintain the temperature in the sintering chamber 5 at a predetermined value, the start-up of the sintering equipment 1 can be carried out rapidly and the temperature in the sintering chamber 5 can be regulated minutely.

There will be next described the carbon used in this embodiment. The carbon is mixed into the raw pellets so that the raw pellets P themselves burn internally during a sintering operation to be sintered effectively. Any carbon is usable provided that it contains a substantial amount of carbon components. In this embodiment is used coal crushed into fine particles having a diameter of not larger than 100 µm by a ball mill.

TABLE-2 shows respective qualities of seventeen types of coal available in Japan. As seen from TABLE-2, these coals have qualities for this embodiment. Specifically, a volatile component is 25 to 45%, a fixed carbon is 32 to 57%, and a heating value is 6300 to 7000 kcal/kg. This coal is excellent as carbon to be mixed into the raw pellets P. Five or less weight percent, preferably 1 to 3 weight percent, of coal is mixed into the raw pellets P. The reason why the added amount of the coal is set at not larger than 5 weight percent is that an ignition loss of the raw pellets P by the combustion of the coal increases if the added amount thereof is larger than 5 weight percent and the sintered pellets P1 having large rigidity cannot be obtained.

**TABLE-2**

| TYPE | 1 (kcal/kg) | 2 (%) | 3 (%) | 4 (%) | 5 (%) | 6 (%) | 7 (°C) |
|---|---|---|---|---|---|---|---|
| A | 6520 | 16.0 | 8.0 | 27.2 | 57.3 | 0.3 | 1530 |
| B | 6750 | 9.5 | 13.0 | 33.0 | 51.0 | 1.0 | 1300 |
| C | 6900 | 8.0 | 15.0 | 29.0 | 53.5 | 0.6 | 1600 |
| D | 6900 | 10.0 | 14.0 | 28.5 | 54.5 | 0.6 | 1300 |
| E | 7000 | 8.0 | 11.0 | 32.0 | 54.0 | 0.8 | 1400 |
| F | 6450 | 8.0 | 19.0 | 29.0 | 49.5 | 0.7 | 1560 |
| G | 6720 | 8.0 | 13.5 | 30.0 | 53.5 | 0.3 | 1560 |
| H | 6800 | 9.0 | 13.5 | 34.0 | 49.5 | 0.5 | 1560 |
| I | 6800 | 8.0 | 14.0 | 32.5 | 51.5 | 0.5 | 1460 |
| J | 6700 | 9.0 | 16.0 | 30.3 | 51.0 | 0.5 | 1560 |
| K | 6660 | 9.0 | 16.0 | 30.3 | 51.0 | 0.5 | - |
| L | 6700 | 8.0 | 15.0 | 32.5 | 49.5 | 1.5 | 1580 |
| M | 6350 | 8.0 | 20.0 | 32.5 | 45.0 | 1.0 | 1300 |
| N | 6700 | 8.0 | 14.0 | 31.0 | 52.0 | 0.8 | 1450 |
| O | 6800 | 8.0 | 14.0 | 25.8 | 54.0 | 0.5 | 1600 |
| P | 6600 | 8.0 | 17.0 | 30.5 | 48.5 | 1.2 | 1300 |
| Q | 6900 | 7.0 | 15.0 | 45.0 | 32.5 | 5.0 | - |
| 1) HEATING VALUE, 2) TOTAL WATER COMPONENT, 3) ASH COMPONENT, 4) VOLATILE COMPONENT, 5) FIXED CARBON, 6) TOTAL SULFUR CONTENT, 7) MELTING POINT OF ASH | | | | | | | |

There will be next described the cement and bentonite used in this invention. These cement and bentonite are mixed into the raw pellets P so as to produce hard sintered pellets P1 by a solidifying function thereof. It may be appropriate to mix only either one of the cement and bentonite into the raw pellets P or to mix a mixture of the cement and bentonite into the raw pellets P.

It is sufficient to use commercially available so-called Portland cement. Regarding the bentonite, the brand does not need to be specified. Sodium bentonite or calcium bentonite may be used. Being formed from decomposed ore such as volcanic ash accumulated at a seabed when volcanoes erupt, the bentonite has an exceedingly large water absorbing function and such a property of expanding as a paste-like material when absorbing the water. An example of chemical composition of the Portland cement and bentonite are listed in TABLE-3 below for reference.

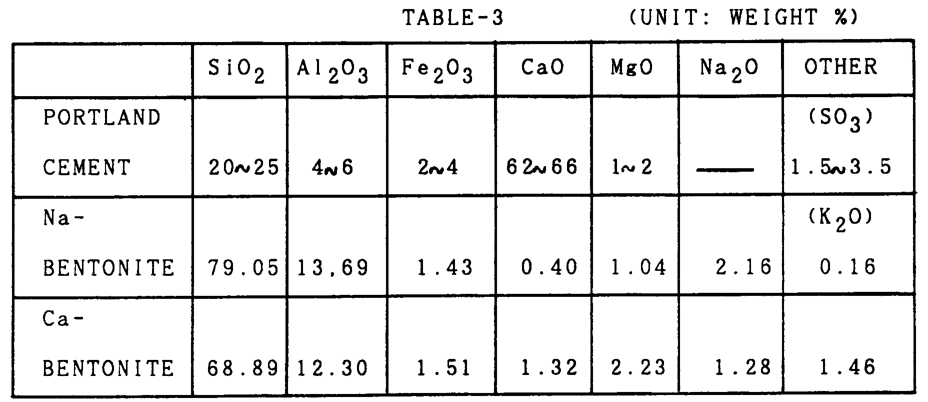

As shown in TABLE-3, the Portland cement and the bentonite have substantially similar components except that the former is rich in calcium and the latter is rich in silica in the composition thereof. Since either one of these is provided with a function as a bonding agent or solidifying agent, they are used as assisting agents for bonding the sintered pellets P1 strongly.

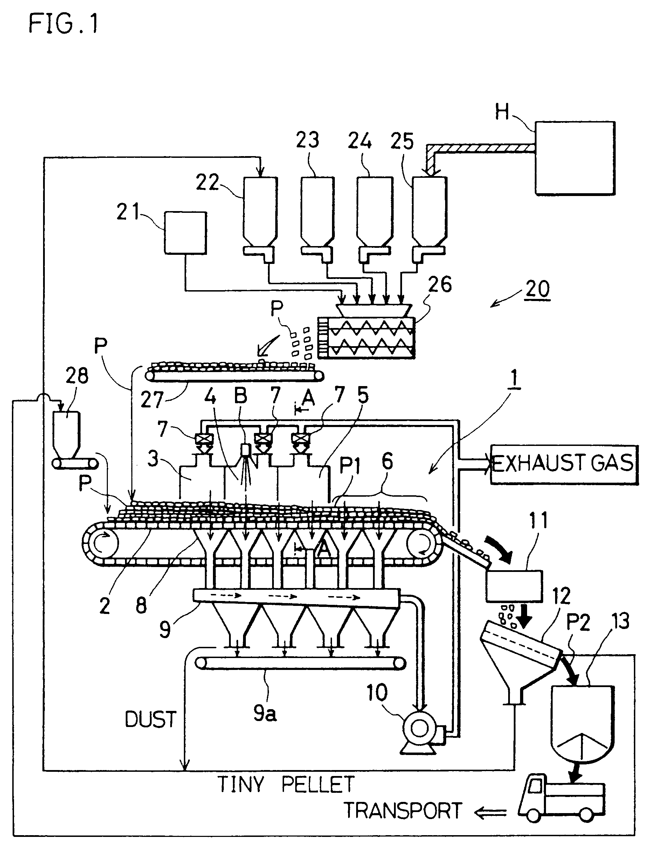

Hereafter, the sintering equipment as an embodiment of the invention will be described more in detail together with an action thereof with reference to Figs. 1 and 2.

In the pelletizer 20, the fly ash as a main material recovered from the waste incineration facility H, the dusts as assisting agents which are recovered waste produced in the sintering equipment 1, the coal (carbon) as self-burning fuel crushed into fine particles of a diameter of not larger than 100 µm, and the cement or bentonite as a solidifying agent are supplied from the fly ash silo 25, dust silo 22, carbon silos 23, and cement silo 24 to the molder 26 by operating the unillustrated table feeders provided at the respective silos. In addition to the above materials, the water as a kneading medium is supplied from the water tank 21 to the molder 26.

An amount of coal supplied from the carbon silo 23 to the molder 26 is set at not larger than 5 weight percent, preferably 1 to 3 weight percent, to the molder 26. Further, an amount of cement or bentonite supplied from the cement silo 24 is set at not larger than 10 weight percent, preferably 1 to 5 weight percent, to the molder 26. Moreover, an amount of water supplied from the water tank 21 is set at such a suitable value that the kneading operation can be carried out in the molder 26 satisfactorily.

In this embodiment, a known double shaft screw type extruder is used as the molder 26 as shown in Fig. 1. The materials supplied to the molder 26 are pushed at a high pressure toward an outlet thereof according to the rotation of the screw and are extruded therefrom. At the outlet of the molder 26 is provided a die including a multitude of discharge ports having a diameter of about 20 mm. The kneaded material is made into the raw pellets P having a diameter of about 20 mm and a length of 30 to 50 mm after passing through the discharge ports. When the raw pellets P of a different size are produced, the die will be replaced with the one including discharge ports having a corresponding diameter.

Although the double shaft screw type extruder is used as the molder 26 in this embodiment, the molder 26 is not limited to the above. In the case of the production of spherical pellets, it will be appropriate to use a known pan type pelletizer. In the case of the production of pellets of a random diameter, it will be appropriate to use a known vibrating pelletizer. The type of the molder is selected depending upon the application of the final product pellets.

The raw pellets P molded in the molder 26 are discharged onto the curing conveyor 27, and are conveyed thereon for about 10 to 30 minutes. The raw pellets P are air-dried while being conveyed.

The raw pellets P molded and conveyed in this way are supplied and piled on the grate 2 of the sintering equipment 1. Above the most upstream portion of the grate 2 is provided a tiny pellet silo 28 for storing tiny pellets fallen through the perforations of the sieve 12 when the product pellets are obtained. The tiny pellets are supplied onto the grate 2 before the raw pellets P are piled thereon. Thus, a layer of raw pellets P is formed on a sole pellet layer of the tiny pellets on the upper surface of the grate 2 as shown in Fig. 2. The reason why two layers of pellets are formed on the grate 2 in this way is to protect the grate 2 from the high temperature heat when the raw pellets P are sintered.

It is suitable to set a width of the grate 2 at 600 mm and a thickness of the raw pellet layer at about 200 mm, for example, in the case of the sintering equipment 1 having a sintering capability of about 1 ton/hour. A production capability of the sintering equipment 1 is determined by a value: the width of the grate 2 × the thickness of the raw pellet layer × a moving speed of the grate 2. However, it is preferable to set the thickness of the raw pellet layer P at about 200 to 300 mm under any condition.

The raw pellets P supplied onto the grate 2 are, in the drying and preheating chamber 3, dried by the hot blast heated by the electric heating elements 5c, 7c, and are preheated up to a temperature where they are easily ignitable in the following ignition chamber 4, i.e. up to 200 to 400°C. In the existing sintering equipments, the hot blast whose temperature has risen upon the receipt of the heat from the high temperature raw pellets P while being recirculated is blown into the drying and preheating chamber 3. However, according to the invention, the hot blasts heated by the electric heating elements 7c provided in the hot blast supply ducts 7 are supplied in a state where the temperature thereof is actively controllable, and the raw pellets P are directly heated by the electric heating elements 5c provided in the sintering chamber 5. Therefore, the equipment 1 is capable of coping with a start-up thereof and an intermittent operation thereof rapidly and properly.

In the following ignition chamber 4 is provided an ignition burner B. By igniting this ignition burner B, the raw pellets P conveyed to the chamber 4 while being preheated at 200 to 400 °C are ignited and burnt. The electric heating elements 5c, 7c are also provided in this ignition chamber 4 to heat the raw pellets P. The provision of the electric heating elements 5c, 7c in the chamber 4 helps the ignition and combustion of the raw pellets P and ignites the raw pellets P more uniformly than in the existing ignition chamber.

In the following sintering chamber 5, the raw pellets P ignited in the preceding process burn themselves by the combustion of the carbon (fine carbon particles) which is a combustible component, and the temperature thereof rises to about 900 to 1300 °C. The sintering proceeds while the raw pellets P are exposed to the air at this temperature for about 1 minute, with result that the raw pellets P become the sintered pellets P1. The electric heating elements 5c, 7c are also provided in the sintering chamber 5, and assist to sinter the raw pellets P efficiently.

The amount of heat of the electric heating elements 5c, 7c is controlled easily by changing the amount of electric supply to the electric heating elements 5c, 7c. Accordingly, the duct 7 and chambers 3, 4, and 5 are easily controlled so as to have predetermined temperatures respectively by providing temperature sensors on the duct 7 and chambers 3, 4, and 5, and changing the electric supply amount to the electric heating elements 5c, 7c based on the detected temperatures. This shows a usefulness of an electric heating element.

Thus obtained sintered pellets P1 are cooled through a heat exchange with the air aspirated by the aspirating force of the induced blower 10 in the following cooling zone of the grate 2. Since the cooled sintered pellets P1 may be fused with one another depending upon the property of the fly ash, they are crushed into individual particles in the crusher 11 in a next process of the grate 2. Thereby, the obtained particles are supplied to the vibrating sieve 12 if necessary to be separated.

More specifically, since the sintered pellets P1 are required to have substantially even diameters in the case where they are used as aggregates, the pellets remaining on the vibrating sieve 12 are separated as the product pellets P2 and are sent to the product bunker 13. The tiny pellets fallen from the sieve 12 are returned to the molder 26 through the dust solo 22, and are used again as a part of the raw material. However, in the case where it is designed to process the toxic substances such as dioxins contained in the fly ash, all the sintered pellets may be product pellets without separating the same by the vibrating sieve 12.

The ores and dusts fallen from the grate 2 are collected onto a recovery conveyor 9a through the wind boxes 8 and the exhaust ducts 9; returned to the dust silo 22 together with the tiny pellets; and reused as a part of the raw material.

Working conditions including residence times of the raw pellets P, P1 in the drying and preheating chamber 3, ignition chamber 5, sintering chamber 5, and cooling zone 6 of the sintering equipment, and the temperature, and a production amount are controlled suitably in consideration of a moving speed of the grate 2 and the thickness of the raw pellet layer. For example, in the case of the sintering equipment 1 having the sintering capability of about 1 ton/hour, working conditions shown in TABLE-4 are adopted as standards.

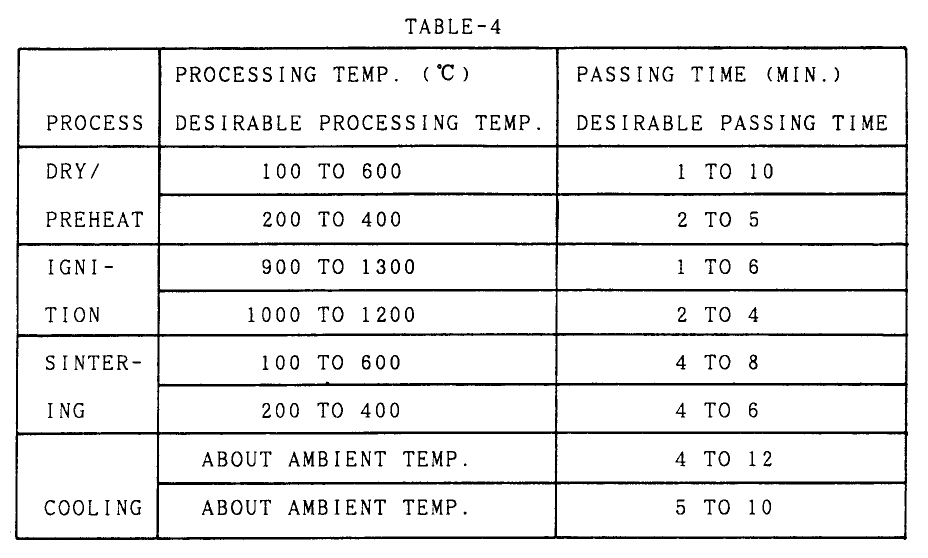

In the case where a huge amount of calcium hydroxide powders and calcium hydroxide slurry are used to remove toxic gas such as hydrochloric acid gas in an exhaust gas process unit of the municipal waste incineration facility H, a large amount of calcium hydroxide and compounds thereof are contained in the raw fly ash. These components exhibit the function of the cement and bentonite, with the result that a mixed amount of cement or the like can be reduced.

Although a large amount of dioxins are contained in the fly ash obtained from the municipal waste incineration facility H, the amount of dioxins in the fly ash decreases in inverse proportion to an amount of heat given to the fly ash, i.e. a multiple of the processing temperature by the processing time. For example, if the fly ash is processed at 525°C for 10 minutes, the density of the dioxins which is initially about 7000 ng/g is reduced to about 500 ng/g. According to the invention, since the fly ash is exposed to the high temperature air of 900 to 1300°C, the dioxins are decomposed reliably. Thus, the sintered pellets P1 or product pellets P2 do not give adverse influence on the environment.

Heavy metals contained in the fly ash melt at particle surfaces of powders by processing the raw pellets P at a high temperature, and are fixed at the sintered portions. Accordingly, the heavy metals are contained in the sintered pellets P1, thereby suppressing the elution thereof effectively. Particularly, toxic hexavalent Cr is reduced to harmless trivalent Cr since the interior of the pellets are held in a reducing atmosphere by the combustion of the carbon in the raw pellets P. Likewise, various heavy metals are stabilized in safer forms.

Various salts contained in the fly ash obtained from the municipal waste incineration facility H function to lower the melting temperature of the fly ash together with the heavy metals. Accordingly, if the amount of carbon mixed in the product pellets P2 is increased as in the prior art, the sintering temperature becomes too high and the sintered pellets P1 are fused into a large mass by the melting of the fly ash, thereby deterring the manufacturing of satisfactory product pellets P2.

In view of the above, according to the invention, the amount of carbon mixed in the raw pellets P is set as small as not larger than 5 weight percent so as to suppress a temperature increase by the self-sustaining burning of the raw pellets P, thereby eliminating the likelihood that the sintered pellets are fused with one another.

Further, according to the invention, the self-sustained heat of the raw pellets P can be reduced since the heat obtained by supplying free power generated privately using the waste heat boiler to the electric heating elements 5c, 7c are utilized as described above. As a result, an amount of carbon which is self-sustained heat generating components in the raw pellets P can be reduced and an amount of heavy oil supplied to the ignition burner B can be reduced. Economical effects obtained by utilizing the privately generated power is enormous, such that an operation cost can be reduced to 1/3 to 2/3 compared to the prior art. Therefore, the use of the fly ash sintering equipment according to the invention is advantageous in terms of the operation cost, particularly compared with the conventional melting and solidifying method of the fly ash of the incinerated municipal waste.

The sintering equipment 1 is advantageous in the operation thereof. Specifically, since the electric heating elements 5c, 7c are heated using the privately generated power so as to heat the raw pellets P together with the hot blast, a temperature control is executable easily and suitably by regulating an amount of power supplied to the heating elements 5c, 7c. As a result, a time required to bring the temperature of the sintering equipment 1 to a steady-state during the start-up thereof is reduced to 1/2 (about 30 minutes) compared to the prior art, and the starting operation of the sintering equipment 1 can be carried out rapidly. Therefore, the sintering equipment 1 is capable of coping efficiently with the intermittent operation which requires many starting operations.

Further, since the sintered pellets P1 are provided with the uniaxial compressive strength of about 20 to 40 (kg/pellet) and the shape thereof is held stably over a long time, they can be disposed safely in a state where they do not give adverse influence on the final disposal facility. Moreover, the sintered pellets P are suitable for many applications including materials for aggregates for concrete, subgrade, backfill, and drain accelerator for flow beds.

### (Experimental Example)

In order to examine the performance of the sintered pellets obtained by the method and equipment according to the invention, a sintering test is conducted using the sintering equipment 1 of 1/1 scale having a production capability of 1 ton/hour. As a main material, only the fly ash scavenged by the dust collector of the municipal waste incineration facility are used, but the dusts and ores generated in the system of the sintering equipment 1 are not used.

A plurality of mixtures of the fly ash with the additives are prepared by mixing the solidifying agent and self-burning agents with the fly ash at different mixing ratios. These mixtures are supplied to the double shaft screw type molder 26 together with the water as a kneading agent and the raw pellets P are molded in the molder 26. The amount of the mixture is set at 84 weight percent in the total amount of the raw kneading material, and the amount of water is set at 16 weight percent in the total amount of the raw kneading material. Bentonite is used as the solidifying agent, and fine particle coal crushed into fine particles of a diameter of not larger than 100 µm are used as the self-burning agent.

There are eleven kinds of material samples thus prepared. The material samples No. 1 to No. 5 shown in TABLE-5 are those of comparative examples in which no additives are mixed. The material samples of No. 6 to No. 8 are those in which 2 weight percent of bentonite is added in the mixture excluding water but no fine particle coal is added. The material sample of No. 9 is the one in which 2 weight percent of bentonite and 4.5 weight percent of fine particle coal are added. The material sample of No. 10 is the one in which 5 weight percent of bentonite and 3 weight percent of fine particle coal are added. The material sample of No. 11 is the one in which maximum 10 weight percent of bentonite and 3 weight percent of fine particle coal are added. Sintering conditions (sintering time and sintering temperature) are set at mutually different values as shown in TABLE-5. It will be appreciated that the sintering time is a sum of residence times of the raw pellets P in the drying and preheating chamber 3, ignition chamber 4, and sintering chamber 5 and that the sintering temperature is the temperature in the ignition chamber 4.

Each of the aforementioned material samples is supplied to the molder 26 to mold the raw pellets P. Thus obtained raw pellets P are supplied continuously onto the grate 2 so as to manufacture the sintered pellets P1. The product pellets remaining on the vibrating sieve 12 are sampled when the sintered state is stabilized so as to measure the quality of the products (24 hour water absorption, uniaxial compressive strength).

The 24 hour water absorption is a value obtained by, when the product pellet P2 is immersed in the water for 24 hours, dividing a weight difference of the pellet P2 before and after the immersion by a weight of the pellet P2 after the immersion. The uniaxial compressive strength is a value of a compressive force when one product pellet P2 is destroyed by a press. Mean values of the results of the experiments conducted on a plurality of product pellets P2 are used as data for the 24 hour water absorption and the uniaxial compressive strength. The experiment results were as shown in TABLE-5 below.

**TABLE 5**

| NO. | ADDITIVE | | SINTERING COND. | | PROPERTY | |
|---|---|---|---|---|---|---|
| | A (%) | B (%) | C (MIN.) | D (°C) | E (%) | F (KG/PEL.) |
| 1 | 0 | 0 | 11.5 | 950 | 52.6 | 2.6 |
| 2 | 0 | 0 | 14.0 | 950 | 51.6 | 2.0 |
| 3 | 0 | 0 | 19.0 | 950 | 50.7 | 3.6 |
| 4 | 0 | 0 | 10.0 | 1100 | 47.4 | 4.2 |
| 5 | 0 | 0 | 15.5 | 1100 | 43.8 | 4.6 |
| 6 | 2 | 0 | 9.5 | 1050 | 45.1 | 5.4 |
| 7 | 2 | 0 | 10.5 | 1150 | 44.8 | 8.2 |
| 8 | 2 | 0 | 17.5 | 1100 | 38.9 | 10.6 |
| 9 | 2 | 4.5 | 4.3 | 1000 | 32.5 | 16.0 |
| 10 | 5 | 3 | 9.0 | 1200 | 37.8 | 18.7 |
| 11 | 10 | 3 | 8.5 | 1100 | 34.6 | 17.7 |
| A) BENTONITE, B) FINE PARTICLE COAL, C) TIME, D) TEMPERATURE, E) 24 HOUR WATER ABSORPTION, F) UNIAXIAL COMPRESSIVE STRENGTH | | | | | | |

As seen from this table, the uniaxial compressive strength of none of the materials No. 1 to No. 5 reaches a target value of 5 (kg/pellet). With this compressive strength, there are many cases where the product pellets P2 cannot resist against the open piling, the burial in the soil, and the digging and are broken when used as soil improving and gardening materials. Thus, the value of the pellets P2 as products is low. The 24 hour water absorption is in excess of a target value, namely 30%, under any sintering condition.

On the contrary, the uniaxial compressive strength of any of the materials No. 6 to No. 11 according to the invention are above the target value. It is found out that the compressive strength increases as the amount of additives increases and that the material preferably contains a combination of 2 to 5 weight percent of solidifying agent represented by the bentonite and 0 to 5 weight percent of self-burning agent (carbon) represented by the fine particle coal. The 24 hour water absorption of any material according to the invention is in excess of the target value of 30%.

As described in detailed above, by adding not larger than 5 weight percent of carbon and water to not larger than 75 weight percent of fly ash, there can be suppressed an event where the sintered pellets are made porous due to the combustion of the carbon which are combustible components. Thus, products of good quality can be obtained. Further, satisfactory sintered pellets which are cheap and easy to handle because they are not too heavy can be manufactured by adding not larger than 10 weight percent of cement or bentonite to the fly ash in addition to water.

Since the raw pellets obtained through the molding are sintered at a temperature of 900 to 1000 °C for longer than 1 minute, all the dioxins contained in the fly ash are thermally decomposed and heavy metals are fixed, thereby particularly eliminating the likelihood that the dioxins fly or elute as by the conventional cementing method. Thus, the sintering method according to the invention is effective enormously in the environmental preservation.

Further, with the sintering equipment according to the invention, electric heating elements are provided either one or both of the interior of a drying and preheating chamber, ignition chamber, and sintering chamber and the interior of ducts. Accordingly, the raw pellets on a grate and hot blasts in the ducts can be heated by the electric heating elements, which compensates for a reduction in a heat retaining effect resulting from a smaller construction of the sintering equipment.

Moreover, a sintering temperature can be controlled easily by regulating an amount of power applied to the electric heating elements, thereby improving the accuracy of the temperature control.

Furthermore, the temperature of the sintering equipment rises rapidly at the start of the operation since the sintering equipment is heated forcibly by the electric heating elements, thereby enabling a rapid start-up of the equipment. As a result, a loss time in the operation time is reduced to increase a working efficiency and thus an intermittent operation during which the equipment is started many times can be carried out efficiently.

Further, by utilizing power from a private power generator provided in a municipal waste incineration facility for generating power utilizing waste heat as power supplied to the electric heating elements, a processing cost for the fly ash can be reduced greatly.

As described above, the invention contributes to reduction in an operation cost of the municipal waste incineration facility since the processing cost for the fly ash can be reduced greatly.

## Claims

1. A method for sintering fly ash of incinerated municipal waste comprising the steps of:
adding water, carbon, and binder to fly ash of incinerated municipal waste discharged from a municipal waste incineration facility;
kneading the mixture into raw pellets; and
holding these raw pellets at a high temperature for a predetermined time.

2. A method as defined in claim 1 wherein 5 or less weight percent carbon is added to 75 or more weight percent fly ash of incinerated municipal waste with respect to the mixture excluding water.

3. A method as defined in claim 2 wherein the binder is a mixture or either one of 10 or less weight percent of cement and bentonite with respect to the mixture excluding water.

4. A method as defined in claim 1 wherein the raw pellets are sintered at a temperature of 900 to 1300 °C for one minute or more.

5. An equipment for sintering fly ash of incinerated municipal waste comprising:
an endless moving grate (2) having a horizontal portion for carrying a material (P) to be sintered;
a drying and preheating chamber (3) for drying and preheating the material;
an ignition chamber (4) for igniting the sintered material; and
a sintering chamber (5) for sintering the sintered material;
the drying and preheating chamber (3), ignition chamber (4), and sintering chamber (5) being disposed above the moving grate (2);
a hot blast supply duct (7) for supplying a hot blast into the drying and preheating chamber (3), ignition chamber (4), and sintering chamber(5);
characterized in that electric heating means (5c, 7c) are provided in one or more of the interior of the drying and preheating chamber (3), ignition chamber (4), and sintering chamber (5) and/or in the interior of the duct (7).

6. An equipment as defined in claim 5 wherein a refractory (5b), (7b) is arranged in each of the drying and preheating chamber (3), ignition chamber (4), sintering chamber (5), and duct (7) so as to cover an inner wall thereof and the electric heating means (5c), (7c).

## Patentansprüche

1. Verfahren zum Sintern von Flugasche von verbranntem Hausmüll mit den Schritten:
Zusetzen von Wasser, Kohlenstoff und einem Binder zu von einer Hausmüllverbrennungseinrichtung abgeführter Flugasche;
Kneten des Gemisches in Roh-Pellets; und
Halten dieser Roh-Pellets bei einer hohen Temperatur für eine vorbestimmte Zeitdauer.

2. Verfahren nach Anspruch 1, wobei, bezogen auf das Gemisch ohne Wasser, fünf oder weniger Gew.-% Kohlenstoff 75 oder mehr Gew.-% Flugasche von verbranntem Hausmüll zugesetzt ist.

3. Verfahren nach Anspruch 2, wobei, bezogen auf das Gemisch ohne Wasser, der Binder ein Gemisch von entweder einem von zehn oder weniger Gew.-% Zement und Betonit ist.

4. Verfahren nach Anspruch 1, wobei die Roh-Pellets bei einer Temperatur von 900 bis 1300°C für eine Minute oder länger gesintert werden.

5. Vorrichtung zum Sintern von Flugasche von verbranntem Hausmüll mit:
einem beweglichen Endlosgitter (2) mit einem Horizontalabschnitt zum Tragen eines zu sinternden Werkstoffes (P);
einer Trocknungs- und Vorheizungskammer (3) zum Trocknen und Vorheizen des Werkstoffes;
einer Zündungskammer (4) zum Zünden des gesinterten Werkstoffes; und
einer Sinterkammer (5) zum Sintern des gesinterten Werkstoffes;
wobei sich die Trocknungs- und Vorheizungskammer (3), die Zündungskammer (4) und die Sinterkammer (5) über dem beweglichen Gitter (2) befinden;
einer Heißwindzufuhrleitung (7) für die Zufuhr von Heißwind in die Trocknungs- und Vorheizungskammer (3), die Zündungskammer (4) und die Sinterkammer (5);
**dadurch gekennzeichnet, daß** eine elektrische Heizeinrichtung (5c, 7c) im Inneren einer oder mehrerer der Trocknungs- und Vorheizungskammer (3), der Zündungskammer (4), der Sinterkammer (5) und Leitung (7) vorgesehen ist.

6. Vorrichtung nach Anspruch 5, wobei ein feuerfestes Material (5b), (7b) sowohl in der Trocknungs- und Vorheizungskammer (3), Zündungskammer (4), Sinterkammer (5) als auch in der Leitung (7) angeordnet ist, um deren Innenwand und die elektrische Heizeinrichtung (5c), (7c) abzudecken.

## Revendications

1. Procédé pour fritter les cendres volantes de déchets municipaux incinérés, comportant les étapes consistant à :
ajouter de l'eau, du carbone, et un liant aux cendres volantes de déchets municipaux incinérés déchargées à partir d'une installation d'incinération de déchets municipaux,
malaxer le mélange sous forme de pastilles brutes, et
maintenir ces pastilles brutes au niveau d'une température élevée pendant un temps prédéterminé.

2. Procédé selon la revendication 1, dans lequel on ajoute 5% en poids, ou moins, de carbone à 75% en poids ou plus de cendres volantes de déchets municipaux incinérés par rapport au mélange excluant l'eau.

3. Procédé selon la revendication 2, dans lequel le liant est un mélange de l'un ou l'autre de 10% en poids ou moins de ciment et de bentonite par rapport au mélange excluant l'eau.

4. Procédé selon la revendication 1, dans lequel les pastilles brutes sont frittées à une température de 900 à 1 300°C pendant une minute ou plus.

5. Equipement pour fritter les cendres volantes de déchets municipaux incinérés, comportant :
une grille (2) se déplaçant sans fin ayant une partie horizontale destinée à transporter une matière (P) destinée à être frittée,
une chambre de séchage et de préchauffage (3) pour sécher et préchauffer la matière,
une chambre d'allumage (4) pour allumer la matière séchée et préchauffée, et
une chambre de frittage (5) pour fritter la matière allumée,
la chambre de séchage et de préchauffage (3), la chambre d'allumage (4), et la chambre de frittage (5) étant agencées au-dessus de la grille mobile (2),
un conduit (7) d'alimentation de vent chaud destiné à envoyer du vent chaud jusqu'à l'intérieur de la chambre de séchage et de préchauffage (3), de la chambre d'allumage (4), et de la chambre de frittage (5),
caractérisé en ce que des moyens électriques de chauffage (5c, 7c) sont agencés dans une ou plusieurs des parties intérieures de la chambre de séchage et de pré-chauffage (3), de la chambre d'allumage (4) et de la chambre de frittage (5) et de la partie intérieure du conduit (7).

6. Equipement selon la revendication 5, dans lequel un produit réfractaire (5b, 7b) est agencé dans chacun des éléments constitués de la chambre de séchage et de préchauffage (3), la chambre d'allumage (4), la chambre de frittage (5), et le conduit (7) de manière à recouvrir la paroi intérieure de ceux-ci et les éléments électriques de chauffage (5c, 7c).
